(19) **Europäisches Patentamt European Patent Office Office européen des brevets**

(11) **EP 4 750 123 A1**

(12) **EUROPEAN PATENT APPLICATION**
published in accordance with Art. 153(4) EPC

(43) Date of publication:
**27.05.2026 Bulletin 2026/22**

(21) Application number: **24844226.1**

(22) Date of filing: **28.02.2024**

(51) International Patent Classification (IPC):
**H04W 24/02** (2009.01)

(52) Cooperative Patent Classification (CPC):
**H04L 41/0823; H04L 41/16; H04W 24/02**

(86) International application number:
**PCT/CN2024/079126**

(87) International publication number:
**WO 2025/020528 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.07.2023 CN 202310927377**

(71) Applicant: **ZTE Corporation**
**Shenzhen, Guangdong 518057 (CN)**

(72) Inventors:
• **WANG, Yaru**
**Shenzhen, Guangdong 518057 (CN)**
• **WANG, Bo**
**Shenzhen, Guangdong 518057 (CN)**

(74) Representative: **Ziebig Hengelhaupt Intellectual Property Attorneys Patentanwaltskanzlei PartGmbB Leipziger Straße 49 10117 Berlin (DE)**

(54) **NETWORK OPTIMIZATION METHOD, NETWORK OPTIMIZATION SYSTEM, COMMUNICATION DEVICE AND STORAGE MEDIUM**

(57) Embodiments of the present application relate to the technical field of communications, and provide a network optimization method, a network optimization system, a communication device and a storage medium, for use in improving the accuracy of network optimization. The network optimization method comprises: on the basis of network optimization requirements of a physical network, determining a first configuration parameter to be optimized; on the basis of a digital twin network corresponding to the physical network, optimizing the first configuration parameter, to obtain an optimal parameter value of the first configuration parameter, and issuing the optimal parameter value of the first configuration parameter to the physical network.

On the basis of network optimization requirements of a physical network, determine a first configuration parameter to be optimized — S101

On the basis of a digital twin network corresponding to the physical network, optimize the first configuration parameter, to obtain an optimal parameter value of the first configuration parameter — S102

Issue the optimal parameter value of the first configuration parameter to the physical network — S103

FIG. 3

EP 4 750 123 A1

## Description

This application claims priority of Chinese Patent Application No. 202310927377.0, filed on July 25, 2023, which is incorporated into this application by reference in its entirety.

TECHNICAL FIELD

The present disclosure relates to the field of communication technologies, and in particular, to a network optimization method, a network optimization system, a communication device and a storage medium.

BACKGROUND

With the development of communication technologies, a variety of network problems may occur. In order to ensure network performance of a network, it is necessary to optimize the network with problems. Network optimization involves determining the causes affecting network quality by performing data analysis, collection and hardware checks on the existing operating network, and ensuring high-quality operation of the network by modifying parameters or adjusting the network structure. In the process of network optimization, it is necessary to accurately analyze the network problems existing in the network and determine the corresponding solutions to the network problems, so as to complete network optimization.

At present, a system simulation method may be used to establish a model, and then network optimization may be completed based on the model. However, the created model has low authenticity due to the factors such as the difficulty in acquiring network data and the inability to frequently adjust wireless network parameters to ensure the stability of the wireless communication network, thereby affecting the accuracy of network optimization.

SUMMARY

The present disclosure provides a network optimization method, a network optimization system, a communication device, and a storage medium, so as to improve the accuracy of network optimization.

To achieve the objective described above, the present disclosure adopts the following technical solutions.

In a first aspect, a network optimization method is provided. The method includes:

determining a first configuration parameter to be optimized according to a network optimization requirement of a physical network;
optimizing the first configuration parameter based on a digital twin network corresponding to the physical network, to obtain an optimal parameter value of the first configuration parameter; and
issuing the optimal parameter value of the first configuration parameter to the physical network.

In a second aspect, a network optimization system is further provided. The network optimization system includes a network optimization module, a digital twin module, and an artificial intelligence module.

The artificial intelligence module is configured to determine a first configuration parameter to be optimized according to a network optimization requirement of a physical network.

The digital twin module is configured to construct a digital twin network corresponding to the physical network according to a construction parameter of the physical network.

The artificial intelligence module is configured to optimize the first configuration parameter based on the digital twin network corresponding to the physical network, to obtain an optimal parameter value of the first configuration parameter.

The network optimization module is configured to issue the optimal parameter value of the first configuration parameter to the physical network.

In a third aspect, a communication device is further provided. The communication device includes a memory and a processor. The memory is coupled to the processor. The memory is configured to store instructions executable by the processor. When the processor executes the instructions, the processor performs the method as described in the first aspect.

In a fourth aspect, a computer-readable storage medium is provided. The computer-readable storage medium has stored computer instructions. When the computer instructions are run on a computer, the computer is enabled to perform the method as described in the first aspect.

In a fifth aspect, a computer program product including computer instructions is provided. When the computer instructions are run on a computer, the computer is enabled to perform the method as described in the first aspect.

The present disclosure provides a network optimization method that may use the digital twin network to optimize the configuration parameter of the physical network, so as to determine the configuration parameter that meets the current network optimization requirement. In this way, the high-fidelity simulation may be performed many times on the physical network to be optimized by using the digital twin network in the optimization process, and states of the digital twin network and the physical network may be obtained in real time, so as to correct the digital twin network, thereby improving the efficiency and accuracy of network optimization.

BRIEF DESCRIPTION OF THE DRAWINGS

The accompanying drawings are used for a further understanding of the technical solutions of the present disclosure, constitute a part of the specification, are used to explain the technical solutions of the present disclosure together with the embodiments of the present disclosure, and do not limit the technical solutions of the present disclosure.

FIG. 1 is a schematic diagram of a physical network provided in embodiments of the present disclosure;
FIG. 2 is a schematic diagram showing a structure of a network optimization system provided in embodiments of the present disclosure;
FIG. 3 is a flow chart of a network optimization method provided in embodiments of the present disclosure;
FIG. 4 is a flow chart of another network optimization method provided in embodiments of the present disclosure;
FIG. 5 is a schematic diagram of another network optimization system provided in embodiments of the present disclosure;
FIG. 6 is a schematic diagram of an inner loop process provided in embodiments of the present disclosure;
FIG. 7 is a schematic diagram of an outer loop process provided in embodiments of the present disclosure;
FIG. 8 is a schematic diagram of another outer loop process provided in embodiments of the present disclosure;
FIG. 9 is a flow chart of another network optimization method provided in embodiments of the present disclosure;
FIG. 10 is a schematic diagram of another inner loop process provided in embodiments of the present disclosure;
FIG. 11 is a schematic diagram of another inner loop process provided in embodiments of the present disclosure; and
FIG. 12 is a schematic diagram showing a structure of a communication device provided in embodiments of the present disclosure.

DETAILED DESCRIPTION

The technical solutions in the embodiments of the present disclosure will be described clearly and completely with reference to the accompanying drawings in the embodiments of the present disclosure. However, the described embodiments are merely some but not all of embodiments of the present disclosure. All other embodiments obtained based on the embodiments of the present disclosure by a person of ordinary skill in the art without paying any creative effort will be included in the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships. For example, A and/or B may mean: only A, A and B at the same time, and only B. In addition, "at least one" means one or more, and "a/the plurality of" means two or more. The words, such as "first" and "second", do not limit the quantity and execution order, and do not necessarily limit existence of a difference between a first item and a second item.

It will be noted, in the present disclosure, the term such as "exemplary" or "for example" is used to represent an example, illustration, or explanation. Any embodiment or design solution described herein with "exemplary" or "for example" in the present disclosure is not necessarily to be construed as preferred or advantageous over other embodiments or design solutions. Rather, the use of the term such as "exemplary" or "for example" is intended to present relevant concepts in a specific manner.

For ease of understanding, the basic concepts of some terms or technologies involved in the embodiments of the present disclosure will first be briefly introduced and explained.

Digital twin (DT) is a simulation process that integrates multiple disciplines, multiple physical quantities, multiple scales, and multiple probabilities by using physical model data, updated sensor data, and operational history data. A physical device may be mapped into virtual space according to the digital twin technology, so as to create a virtual model (or referred to as a digital model) corresponding to the physical device. This virtual model may be referred to as a "digital twin body". The digital twin body is a virtual representation of the real world that includes physical objects, processes, relationships, and behaviors, and may reflect the entire life cycle of the physical device corresponding to the digital twin body. The digital twin body may simulate the behavior of the physical device by using real-time data sent from sensors on the physical device and operational history data of the physical device.

Artificial intelligence (AI) is a theory, a method, a technology and an application system that simulates, extends and expands human intelligence by using digital computers or machines controlled by the digital computers, to sense the environment, obtain knowledge and achieve optimal results by using the knowledge. In other words, artificial intelligence is a branch of computer science that aims to learn the nature of intelligence and produce a new kind of intelligent machine that can react in a way similar to human intelligence. Artificial intelligence is to study design principles and implementation methods of a variety of intelligent machines, so that the machines may have the functions of perception, reasoning, and decision. Research in the field of artificial intelligence includes robots, natural language processing, computer vision, decision and reasoning, human-computer interaction, recommendation and search, and AI basic theories, and the like.

The description mentioned above is an introduction to the technical terms involved in the embodiments of the present disclosure, and details will not be repeated below.

In order to improve the accuracy of network optimization, a network optimization method is provided in the embodiments of the present disclosure. The method includes: determining a first configuration parameter to be optimized according to a network optimization requirement of a physical network; optimizing the first configuration parameter based on a digital twin network corresponding to the physical network, to obtain an optimal parameter value of the first configuration parameter; and issuing the optimal parameter value of the first configuration parameter to the physical network. In this way, the high-fidelity simulation may be performed many times on the physical network to be optimized by using the digital twin network in the optimization process, and states of the digital twin network and the physical network may be obtained in real time, so as to correct the digital twin network, thereby improving the efficiency and accuracy of network optimization.

The physical network is a network formed by connecting a variety of physical devices (e.g., hosts, routers, switches) and media (e.g., optical cable, electrical cable, twisted pair) in a network. The physical network may include an access network for mobile communications and a core network. Alternatively, the physical network may also be a fixed communication network.

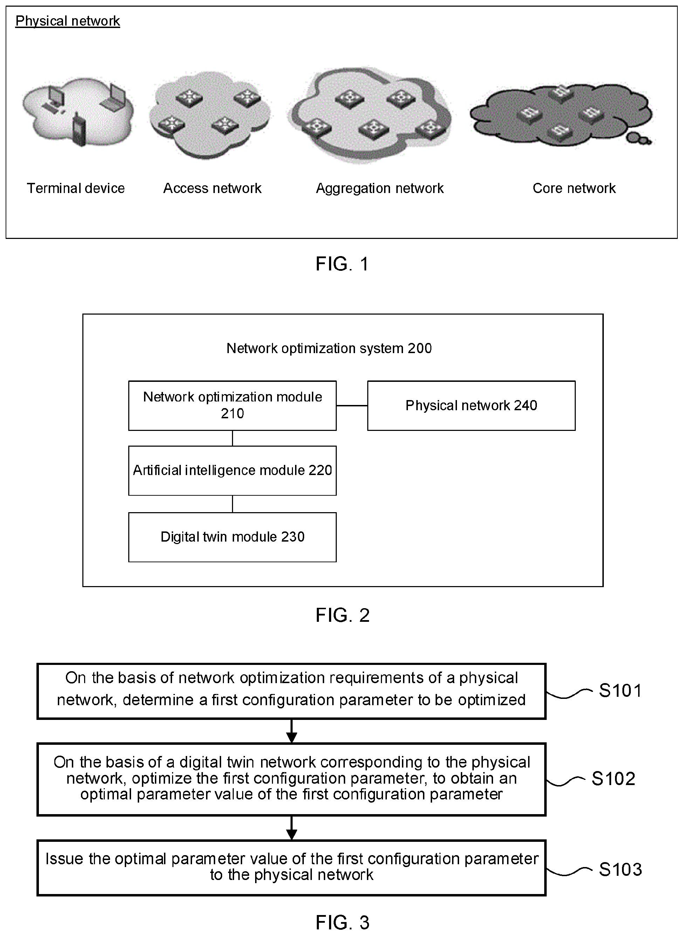

As shown in FIG. 1, the physical network may include an access network, an aggregation network and a core network. The physical network may also include a combined device of terminal devices, access switches, aggregation switches, and core switches. In some embodiments, the physical network may include network devices such as hubs, switches, bridges, routers, gateways, network interface cards, and wireless access points.

The access network refers to all devices between a backbone network and a user terminal, and is composed of a series of transmission entities between a service node interface and a user-network interface.

The core network may be composed of multiple functional units, which may be classified into functional entities of a control plane and functional entities of a data plane, to perform functions such as user access control, mobility management, session management, user security authentication, and charging. An access and mobility management function (AMF) is responsible for user access management, security authentication, and mobility management. A user plane function (UPF) is responsible for managing the transmission of user plane data, traffic statistics, security eavesdropping, and other functions.

In some embodiments, the terminal device may be a device with a wireless transceiving function. The terminal device may be deployed on land, which includes indoor or outdoor, handheld, wearable or vehicle-mounted. The terminal device may also be deployed on water (e.g., on a ship). The terminal device may also be deployed in the air (e.g., on an airplane, on a balloon and on a satellite). The terminal may be a mobile phone, a tablet computer (pad), a computer with a wireless transceiving function, a virtual reality (VR) terminal, an augmented reality (AR) terminal, a wireless terminal in an industrial control system, a wireless terminal in an autonomous driving system, a wireless terminal in a remote medical system, a wireless terminal in a smart grid, a wireless terminal in a transportation safety system, a wireless terminal in a smart city, a wireless terminal in a smart home, etc. The embodiments of the present disclosure do not limit the application scenarios. The terminal may sometimes also be referred to as a user, user equipment (UE), an access terminal, a UE unit, a UE station, a mobile station, a mobile radio station, a remote station, a remote terminal, a mobile device, a UE terminal, a wireless communication device, a UE agent, a UE device, etc., and the embodiments of the present disclosure are not limited thereto.

As shown in FIG. 2, a network optimization system is further provided in the embodiments of the present disclosure and may be applied to the mobile communication network described above. The network optimization system 200 may include a network optimization module 210, an artificial intelligence module 220, and a digital twin module 230. In some embodiments, the network optimization system 200 may also include a physical network 240.

In the embodiments of the present disclosure, the network optimization module 210 is configured to perform the network optimization method provided in the present disclosure, to analyze the network problems existing in the network and determine the corresponding solutions to the network problems.

In some embodiments, the network optimization module 210 further has an intelligent decision function, a performance evaluation function, and a parameter issuing function.

The intelligent decision function means that the network optimization module 210 may be used to determine a sub-service type according to a network optimization requirement of the physical network, so as to determine the sub-service type corresponding to the network optimization requirement, thereby completing network optimization according to the sub-service type. For example, the sub-service type includes a traffic optimization service, an interference optimization service, and a resource utilization service.

In some embodiments, each sub-service type has its own corresponding artificial intelligence algorithm function, artificial intelligence algorithm structure and parameter configuration. The artificial intelligence algorithm structure includes a neural network structure, such as a convolutional network structure, or includes a non-neural network algorithm, such as Bayesian optimization. Each sub-service type may also have corresponding algorithm parameter settings, such as the number of iterations and the optimization direction.

In some embodiments, the network optimization module 210 may obtain a first digital twin result, and the first digital twin result is a digital twin result obtained by a digital twin network according to an optimal parameter value of the first configuration parameter. Moreover, in a case where the first digital twin result meets the network optimization requirement, the network optimization module 210 may issue the optimal parameter value of the first configuration parameter to the physical network.

In addition, the network optimization module 210 may also obtain a running result of the physical network, which is obtained by the physical network according to the optimal parameter value of the first configuration parameter, and determine an adjustment strategy for the digital twin network according to a superiority-inferiority relationship between the running result and the first digital twin result. The first digital twin result is a digital twin result obtained by the digital twin network according to the optimal parameter value of the first configuration parameter. In a case where the running result is inferior to the first digital twin result, the adjustment strategy includes performing performance correction processing on the digital twin network.

Furthermore, the network optimization module 210 may also send the adjustment strategy to the digital twin module 230, so that the digital twin module 230 may adjust the digital twin network according to the adjustment strategy.

In some embodiments, the network optimization module 210 may also obtain the first digital twin result, and the first digital twin result is a digital twin result obtained by the digital twin network according to the optimal parameter value of the first configuration parameter. In a case where the first digital twin result meets the network optimization requirement, the network optimization module 210 may issue the optimal parameter value of the first configuration parameter to the physical network.

In some embodiments, the network optimization module 210 may also receive a second digital twin result uploaded by the artificial intelligence module 220, and issue, in a case where the second digital twin result meets the network optimization requirement, an optimal parameter value of a second configuration parameter to the physical network.

In some embodiments, the network optimization module 210 is further configured to issue, in a case where the second digital twin result does not meet the network optimization requirement, a parameter value of a third configuration parameter to the physical network. The parameter value of the third configuration parameter is a parameter value of a configuration parameter corresponding to an optimal digital twin result between the first digital twin result and the second digital twin result.

The parameter issuing function means that the network optimization module 210 may be used to issue a configuration parameter of the digital twin network to the digital twin module 230, issue an artificial intelligence configuration parameter to the artificial intelligence module 220, and issue, in a case where the first configuration parameter is determined, the optimal parameter value of the first configuration parameter to the physical network. For example, the network optimization module 210 may first determine the sub-service type corresponding to the network optimization requirement, and determine, according to the sub-service type, the artificial intelligence algorithm function, artificial intelligence algorithm structure and parameter configuration that needs to be issued, and then issue the determined parameter to the corresponding module.

The performance evaluation function means that the network optimization module 210 may be used to analyze and evaluate the network performance of the digital twin network and the physical network according to the acquired data of the digital twin network and the physical network.

In the embodiments of the present disclosure, the artificial intelligence module 220 is configured to determine the first configuration parameter to be optimized according to the network optimization requirement of the physical network, and optimize the first configuration parameter based on the digital twin network corresponding to the physical network, so as to obtain the optimal parameter value of the first configuration parameter.

In some embodiments, the artificial intelligence module 220 further has an artificial intelligence algorithm parameter configuration function, an artificial intelligence optimization function, a configuration issuing function, and a result reporting function.

The artificial intelligence algorithm parameter configuration function means that the artificial intelligence module 220 configures an artificial intelligence function or service corresponding to the artificial intelligence algorithm parameter according to the received artificial intelligence algorithm parameter determined for this network optimization and issued by the network configuration module 210. The artificial intelligence algorithm parameter includes an artificial intelligence algorithm function and an artificial intelligence algorithm structure. The artificial intelligence algorithm structure includes a neural network structure, such as a convolutional network structure, or includes a non-neural network algorithm, such as Bayesian optimization. Each sub-service type may also have corresponding algorithm parameter settings, such as the number of iterations and the optimization direction.

In some embodiments, the artificial intelligence module 220 may also perform a preset number of iterative updates on a parameter value of the first configuration parameter, so as to obtain a plurality of parameter values of the first configuration parameter. The artificial intelligence algorithm parameter may also include an artificial intelligence training set, and the plurality of parameter values obtained by the iterative updates may also form the artificial intelligence training set.

The artificial intelligence optimization function refers to a function that the artificial intelligence module 220 optimizes the first configuration parameter. The artificial intelligence module 220 may input the plurality of parameter values obtained by the iterative updates into the digital twin network, to obtain the digital twin result corresponding to the parameter value of the first configuration parameter after each iterative update, and then determine the optimal parameter value of the first configuration parameter from the digital twin results corresponding to the plurality of parameter values.

In some embodiments, the artificial intelligence module 220 may perform a preset number of iterative updates on the parameter value of the first configuration parameter; input the parameter value of the first configuration parameter after each iterative update into the digital twin network, to obtain the digital twin result corresponding to the parameter value of the first configuration parameter after each iterative update; use the optimal digital twin result in the digital twin results corresponding to the parameter values of the first configuration parameter after the iterative updates as the first digital twin result; and use the parameter value of the first configuration parameter corresponding to the first digital twin result as the optimal parameter value of the first configuration parameter.

In some embodiments, the artificial intelligence module 220 may also optimize a second configuration parameter based on the digital twin network corresponding to the physical network, to obtain an optimal parameter value of the second configuration parameter and a second digital twin result. The second digital twin result is a digital twin result obtained by the digital twin network according to the optimal parameter value of the second configuration parameter.

The configuration issuing function means that the artificial intelligence module 220 may issue the plurality of parameter values of the first configuration parameter obtained by the iterative updates to the digital twin module.

The result reporting function means that the artificial intelligence module 220 determines the optimal parameter value of the first configuration parameter from the digital twin results corresponding to the plurality of parameter values and may report the optimal parameter value to the network optimization module 210.

In the embodiments of the present disclosure, the digital twin module 230 is configured to construct the digital twin network corresponding to the physical network according to a construction parameter of the physical network. In some embodiments, the digital twin module 230 further has a mirror mapping function, a simulation function, and a result reporting function.

The mirror mapping function means that the digital twin module 230 may determine, according to the configuration parameter of the physical network, a construction parameter of the digital twin network, and perform a digital twin mirror mapping process, so as to construct the digital twin network corresponding to the physical network. In some embodiments, in a case where a change in a physical state of the physical network is detected, the digital twin module 230 may also update the construction parameter of the digital twin network, to obtain the updated construction parameter, and reconstruct the digital twin network according to the mirror mapping function of the digital twin module 230 and the updated construction parameter.

The simulation function means that the digital twin module 230 receives the parameter value of the first configuration parameter obtained by the iterative update and issued by the artificial intelligence module 220 to the digital twin module, and adjusts and updates the network configuration information of the digital twin network according to the parameter value, so as to configure a digital twin network matching the parameter value.

The result reporting function means that the digital twin module 230 may report the digital twin result obtained by each iterative update to the artificial intelligence module 220.

In some embodiments, the network optimization system 200 may further include a physical network 240. The physical network 240 is configured to receive the optimal parameter value of the first configuration parameter and adjust the physical network according to the optimal parameter value of the first configuration parameter.

In some embodiments, the physical network 240 may have a business service function and a state reporting function.

The business service function means that the physical network 240 may adjust the physical network according to a business requirement of the user. That is to say, the physical network is adjusted according to the optimal parameter value of the first configuration parameter determined according to the network optimization requirement, and the network optimization requirement is determined according to the business requirement of the user.

The state reporting function means that the physical network 240 may report a real state of the physical network to the network optimization module 210 in a periodic manner or an event-driven manner. The real state of the physical network is reported to the network optimization module 210 in the event-driven manner, which means that the reporting is triggered by an event occurring in the physical network. The event may include an event that a physical state of the physical network changes, and a physical state detection event of the physical network.

The network optimization method provided in the present disclosure is described below with reference to the accompanying drawings of the specification.

As shown in FIG. 3, a network optimization method is provided in the embodiments of the present disclosure, and the method includes S101 to S103.

In S101, a first configuration parameter to be optimized is determined according to a network optimization requirement of a physical network.

In some embodiments, the network optimization requirement includes any one of: an environment configuration requirement, a resource utilization requirement, a requirement for the number of retransmissions, a capacity requirement, and a service experience requirement.

For example, the environment configuration requirement may be a requirement related to geographical information configuration of the physical network, a requirement related to system information configuration, a requirement related to frequency information configuration, or a requirement related to access configuration. The resource utilization requirement may be a requirement related to an average utilization rate of an uplink or downlink physical resource block (PRB) of the physical network, such as a requirement for increasing the average utilization rate of the uplink PRB. The requirement for the number of retransmissions may be a requirement related to an uplink or downlink packet loss rate of the physical network, a requirement related to an uplink or downlink retransmission rate, such as a requirement for reducing the downlink packet loss rate. The capacity requirement may be a requirement related to an average throughput per PRB in the uplink or downlink of the physical network, such as a requirement for increasing the average throughput per PRB in the uplink. The service experience requirement may be a traffic optimization requirement.

In some embodiments, the network optimization requirement of the physical network may be determined according to different types of received network problem feedback or different types of received network requirement feedback. The different types of network problem feedback may include network problem feedback or network requirement feedback from users, operators, network planners or network optimization engineers, etc.

For example, considering the network optimization system 200 shown in FIG. 2 as an example, the users of the network optimization system 200 may include users, operators, network planners or network optimization engineers. In a case where the network optimization system 200 receives network requirement feedback "How to speed up video download speed?" input by the user, or network requirement feedback "How to obtain maximum capacity?" input by the operator, or network requirement feedback "How to configure parameters of the adaptive modulation and coding (AMC) algorithm or power control algorithm to obtain maximum uplink throughput and maximum downlink throughput?" input by the network planner or network optimization engineer, the network optimization system 200 may determine that the network optimization requirement of the physical network is to obtain the maximum data volume while the physical state of the physical network is unchanged.

In some embodiments, the first configuration parameter includes at least one of: a geographic information configuration parameter, a system information configuration parameter, a frequency information configuration parameter, an access configuration parameter, a physical layer parameter, a control algorithm parameter, a power control algorithm parameter, and an adaptive modulation and coding (AMC) parameter.

In some embodiments, a target parameter is determined according to the network optimization requirement, and then the first configuration parameter is determined from a set of configuration parameters related to the target parameter. For example, in an example where the network optimization requirement is that the network optimization requirement of the physical network is determined to obtain the maximum data volume while the physical state of the physical network is unchanged, the target parameter may be determined as a parameter determined according to the uplink throughput and the downlink throughput. The configuration parameter related to the uplink throughput and the downlink throughput may include a power control algorithm parameter and an AMC parameter. That is to say, the first configuration parameter may include the power control algorithm parameter and/or the AMC parameter.

In some embodiments, the first configuration parameter may be determined according to the degree of influence of each configuration parameter on the network optimization requirement, that is, the first configuration parameter may be determined according to the degree of influence of each configuration parameter on the target parameter. Therefore, one or more configuration parameters that may affect the target parameter related to the network optimization requirement may be determined as the first configuration parameter according to the network optimization requirement of the physical network.

In some embodiments, a plurality of network optimization requirements may be received. Furthermore, the plurality of network optimization requirements may be prioritized according to optimization priorities of the plurality of network optimization requirements. First, network optimization is performed according to a first network optimization requirement with the highest optimization priority. Network optimization is performed according to a second network optimization requirement with an optimization priority second only to the first network optimization requirement after the network optimization process is completed, and so on, until network optimization for the network optimization requirement with the lowest optimization priority is completed.

In some embodiments, the construction parameter of the digital twin network may be determined according to the construction parameter of the physical network, and then the digital twin network corresponding to the physical network may be constructed according to the determined construction parameter of the digital twin network. Furthermore, the first configuration parameter may be optimized based on the digital twin network corresponding to the physical network.

In some embodiments, the construction parameter of the digital twin network includes one or more of: a network state configuration parameter, a relevant algorithm parameter, and an environment parameter.

The network state configuration parameter includes one or more of: a network key performance indicator (KPI), a cell load parameter, a cell interference parameter, a user statistical characteristic parameter. The relevant algorithm parameter includes one or more of: a physical layer parameter, a scheduling algorithm parameter, a power control algorithm parameter, and an AMC parameter. The environment parameter includes one or more of: a geographical parameter, a system parameter, a frequency parameter, and an access configuration parameter.

In some embodiments, the digital twin network may be constructed before the first configuration parameter to be optimized is determined according to the network optimization requirement of the physical network. Alternatively, the digital twin network may be constructed before the first configuration parameter is optimized by performing the step S102 below.

In some embodiments, the physical state of the physical network may be periodically detected. In response to detecting that the physical state of the physical network changes, the construction parameter of the digital twin network is updated, to obtain the updated construction parameter, and the digital twin network may be reconstructed according to the updated construction parameter.

In some embodiments, in response to detecting that the physical state of the physical network changes, the first configuration parameter to be optimized may also be determined according to the network optimization requirement of the physical network.

It will be noted that in the method provided in the embodiments of the present disclosure, the construction parameter of the digital twin network may be updated after the physical state of the physical network changes, so that the authenticity of the digital twin network construction may be improved and the problem of simulation data errors caused by the unstable physical network state may be avoided.

In S102, the first configuration parameter is optimized based on a digital twin network corresponding to the physical network, so as to obtain an optimal parameter value of the first configuration parameter.

In some embodiments, the optimal parameter value refers to a parameter value of the first configuration parameter that best meets the network optimization requirement and is determined based on the digital twin network corresponding to the physical network.

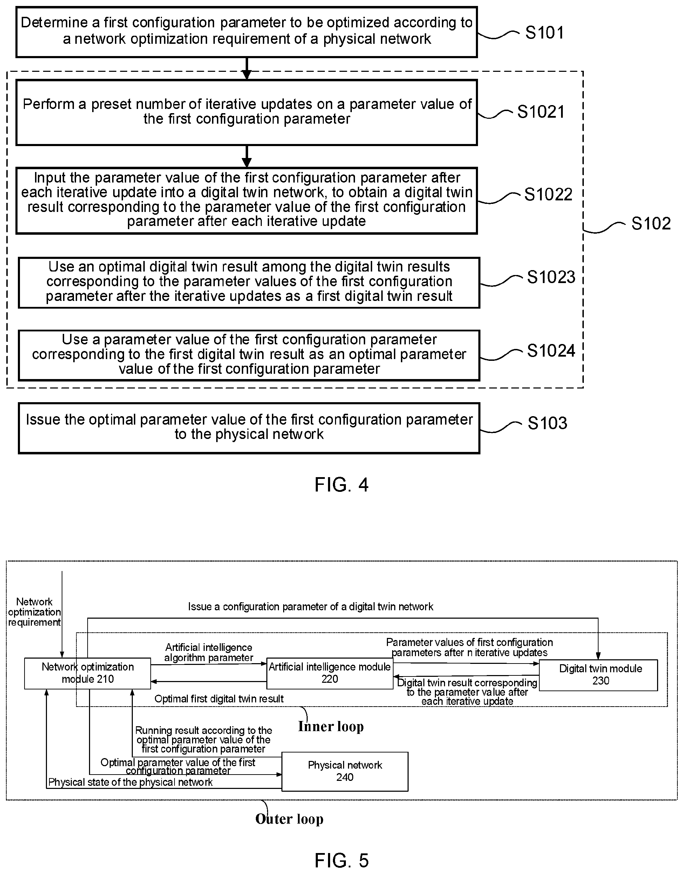

In some embodiments, as shown in FIG. 4, the step S102 may be specifically implemented as the following steps S1021 to S1024.

In S1021, a preset number of iterative updates are performed on a parameter value of the first configuration parameter.

In some embodiments, a parameter value of the first configuration parameter after the i-th iterative update is determined according to a parameter value of the first configuration parameter after the (i-1)-th iterative update and a digital twin result corresponding to the parameter value of the first configuration parameter after the (i-1)-th iterative update, and i is a positive integer.

In some embodiments, the preset number of iterative updates are performed, according to an artificial intelligence algorithm, on the parameter value of the first configuration parameter.

An artificial intelligence algorithm parameter may be determined according to the network optimization requirement, and then the preset number of iterative updates are performed on the parameter value of the first configuration parameter according to the artificial intelligence algorithm corresponding to the artificial intelligence algorithm parameter. The artificial intelligence algorithm parameter includes an artificial intelligence algorithm function and an artificial intelligence algorithm structure. In some embodiments, the sub-service type corresponding to the network optimization requirement may be determined according to the network optimization requirement, and then the artificial intelligence algorithm parameter such as the artificial intelligence algorithm function and the artificial intelligence algorithm structure may be determined according to the sub-service type.

For example, in a case where the network optimization requirement of the physical network is to obtain the maximum data volume without any change in the physical state of the physical network, the sub-service type may be determined as a traffic optimization sub-service type, the artificial intelligence algorithm function corresponding to the traffic optimization sub-service type may be the following formula (1), and the artificial intelligence algorithm structure corresponding to the traffic optimization sub-service type may be the tree-structured Parzen estimator (TPE) model.

For this network optimization requirement, it is necessary to determine a configuration parameter of the digital twin network with the maximum throughput. The target parameter may be determined according to the uplink throughput and the downlink throughput. For example, the target parameter may be determined as a sum of the downlink throughput with a weight of 1/2 and the uplink throughput with a weight of 1. The artificial intelligence algorithm function may be:

$$Object = ul\_throughput + \frac{dl\_throughput}{2} \qquad \text{Formula (1)}$$

Herein, Object is the target parameter determined according to the network optimization requirement, ul_throughput is the uplink throughput, and dl_throughput is the downlink throughput.

Furthermore, a configuration parameter, in the digital twin network, having the highest impact on the target parameter, may be selected as the first configuration parameter. For example, a downlink bit error rate and a downlink AMC adjustment step that are related to the AMC algorithm may be selected.

Therefore, an initial parameter value and value range of the first configuration parameter may be determined first. For example, the initial parameter value includes a downlink bit error rate of 0.0 and a downlink AMC adjustment step of 0.75, and the value ranges of the downlink bit error rate and the downlink AMC adjustment step may be shown in Table 1.

Table 1

| Serial number | First configuration parameter | Value range |
|---|---|---|
| 1 | Downlink bit error rate | 0, 0.05, 0.1, 0.15, 0.2, 0.25, 0.3 |
| 2 | Downlink AMC adjustment step | 0, 0.1875, 0.375, 0.5625, 0.75 |

Furthermore, the TPE model may fit a random model that aligns with historical data according to historical learning parameters, so as to perform the preset number of iterative updates on the parameter value of the first configuration parameter. For example, the preset number may be 50 and a learning direction is "maximum value" according to the network optimization requirement of the physical network for obtaining the maximum data volume. Therefore, 50 iterative updates may be performed on the parameter value of the first configuration parameter, so as to obtain the parameter values of the first configuration parameter after 50 iterative updates.

In S1022, the parameter value of the first configuration parameter after each iterative update is input into a digital twin network, to obtain the digital twin result corresponding to the parameter value of the first configuration parameter after each iterative update.

In some embodiments, the digital twin result is used to indicate the network performance of the digital twin network related to the network optimization requirement. For example, a parameter value of the target parameter described above may be used to characterize the digital twin result.

For example, the configuration parameter of the digital twin network may be updated and adjusted according to the parameter value of the first configuration parameter after the iterative update. The parameter value of the target parameter obtained by this iteration are determined after the update of the digital twin network is completed.

In an example where the network optimization requirement of the physical network is to obtain the maximum data volume, the system operates for 200 seconds at a time, each base station includes 3 cells, the number of users is 10, and a linear distance between each user and the base station is 9 m. The downlink throughput of 123.15 Mbps and the uplink throughput of 38.71 Mbps may be obtained according to the downlink bit error rate of 0.0 and the downlink AMC adjustment step of 0.75 in the initial value of the first parameter, so that the parameter value of the target parameter may be obtained as 100.28 Mbps according to the formula (1). For example, the parameter values of the target parameter obtained by a plurality of iterative updates are shown in Table 2.

Table 2

| Serial number | Downlink throughput (Mbps) (Average in cells) | Uplink throughput (Mbps) (Average in cells) | Target value (Mbps) (Average in cells) |
|---|---|---|---|
| 1 | 123.15 | 38.71 | 100.28 |
| 2 | 43.78 | 38.71 | 60.60 |
| 3 | 123.12 | 38.66 | 100.22 |
| 4 | 43.78 | 38.71 | 60.60 |
| 5 | 123.15 | 38.71 | 100.28 |

In some embodiments, in a case where the physical state of the physical network changes, the digital twin network may be reconstructed by using the parameter value of the first configuration parameter after each iterative update. The parameter values of the target parameter obtained by a plurality of iterative updates are shown in Table 3.

Table 3

| Serial number | Downlink throughput (Mbps) (Average in | Uplink throughput (Mbps) (Average in | Target value (Mbps) (Average in |
|---|---|---|---|
| | cells) | cells) | cells) |
| 1 | 1.62 | 20.63 | 21.44 |
| 2 | 1.57 | 20.12 | 20.90 |
| 3 | 0.42 | 1.62 | 20.08 |
| 4 | 0.51 | 1.65 | 22.24 |
| 5 | 1.59 | 19.88 | 20.68 |

In S1023, an optimal digital twin result among the digital twin results corresponding to the parameter values of the first configuration parameter after the iterative updates is used as a first digital twin result.

For example, in an example where the network optimization requirement of the physical network is to obtain the maximum data volume, in a case where a parameter value after the 7-th iterative update is the optimal digital twin result among the digital twin results corresponding to the parameter values after the iterative updates, a digital twin result corresponding to the parameter value after the 7-th iterative update may be used as the first digital twin result. The first configuration parameter includes a downlink bit error rate of 0.25 and an AMC adjustment step of 0.5625, and the maximum throughput is 100.28 Mbps.

Alternatively, on the basis of the embodiment shown in Table 3, in a case where a parameter value after the 45-th iterative update is the optimal digital twin result among the digital twin results corresponding to the parameter values after the iterative updates, a digital twin result corresponding to the parameter value after the 45-th iterative update may be used as the first digital twin result. The first configuration parameter includes a downlink bit error rate of 0.1 and an AMC adjustment step of 0.1875, and the maximum throughput is 23.07 Mbps.

In some embodiments, in the network optimization system shown in FIG. 2, the artificial intelligence module 220 may report the first digital twin result and the parameter value of the first configuration parameter corresponding to the digital twin result to the network optimization module 210 after determining the first digital twin result.

In S1024, a parameter value of the first configuration parameter corresponding to the first digital twin result is used as an optimal parameter value of the first configuration parameter.

In S103, the optimal parameter value of the first configuration parameter is issued to the physical network.

In some embodiments, the first digital twin result is obtained, and the first digital twin result is a digital twin result obtained by the digital twin network according to the optimal parameter value of the first configuration parameter. In a case where the first digital twin result meets the network optimization requirement, the optimal parameter value of the first configuration parameter is issued to the physical network.

It will be noted that the method provided in the present disclosure may also determine the first digital twin network according to network optimization requirement, and send, in a case where the requirement is met, configuration parameter value, which may further improve the accuracy of network optimization.

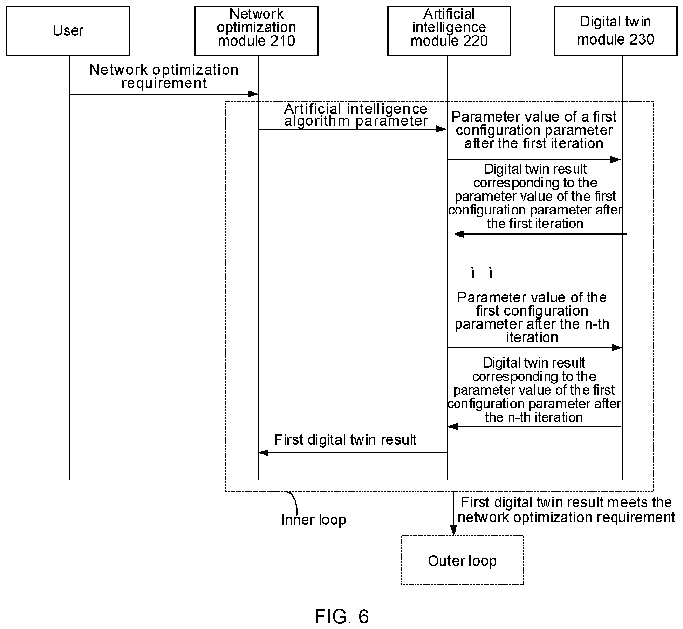

In an example, in combination with the network optimization system shown in FIG. 2, the process of determining the optimal parameter value of the first configuration parameter may be an inner loop process in the network optimization process. As shown in FIG. 5 or 6, the inner loop process includes a step in which the network optimization module 210 issues the configuration parameter of the digital twin network to the digital twin module 230 and issues, according to network optimization requirement, the artificial intelligence algorithm parameter to the artificial intelligence module 220. The artificial intelligence module 220 optimizes the first configuration parameter according to the artificial intelligence algorithm parameter, issues the parameter values of the first configuration parameter after n iterative updates to the digital twin module 230, receives the digital twin result corresponding to the parameter value after each iterative update, and reports the optimal first digital twin result among the digital twin results to the network optimization module 210. Furthermore, in a case where the first digital twin result meets the network optimization requirement, the network optimization module 210 issues the optimal parameter value of the first configuration parameter to the physical network, that is, an outer loop process is initiated.

In some embodiments, in a case where the physical state of the physical network is unchanged, the optimal parameter value of the first configuration parameter is issued to the physical network.

In some embodiments, the optimal parameter value of the first configuration parameter may also be transmitted to the user.

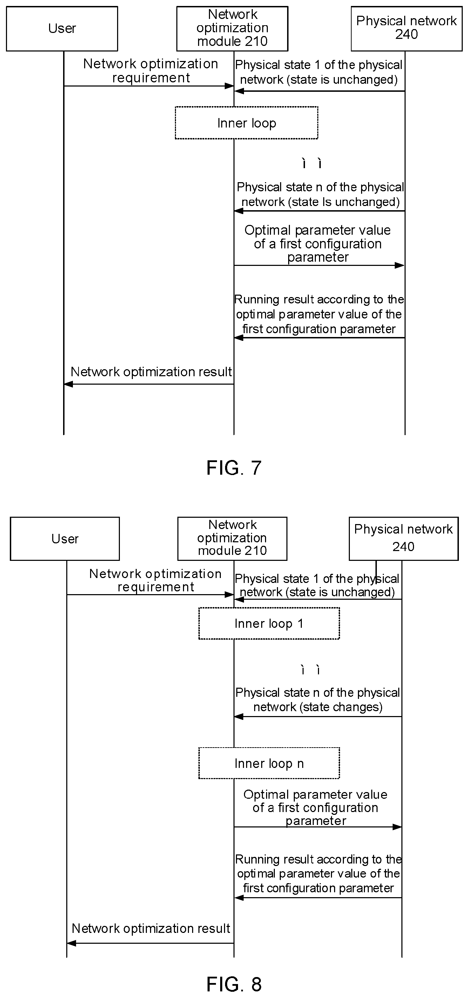

In another example, in combination with the network optimization system shown in FIG. 2, on the basis of the

EP 4 750 123 A1

inner loop, the data transmission process between the network optimization module 210 and the physical network 240 may be the outer loop process of the network optimization system. As shown in FIG. 5 or 7, the outer loop process includes a step in which the network optimization module 210 receives the network optimization requirement input by the user and transmits the network optimization result, that is, the optimal parameter value of the first configuration parameter, to the user. The network optimization module 210 may further issue the optimal parameter value of the first configuration parameter to the physical network, and the physical network 240 may report the physical state of the physical network to the network optimization module 210 while the physical state of the physical network remains unchanged. In some embodiments, the physical network 240 may further report a running result according to the optimal parameter value of the first configuration parameter to the network optimization module 210.

In some embodiments, in a case where the physical state of the physical network changes, the digital twin network is reconstructed. In this case, the configuration parameter of the physical network may be re-optimized based on the reconstructed digital twin network, so as to obtain the optimal parameter value of the first configuration parameter.

In yet another example, in combination with the network optimization system shown in FIG. 2, as shown in FIG. 8, in a case where the physical state of the physical network changes, the inner loop process may also be initiated multiple times based on the embodiment shown in FIG. 7.

The present disclosure provides a network optimization method that may use the digital twin network to optimize the configuration parameter of the physical network, so as to determine the configuration parameter that meets the current network optimization requirement. In this way, the high-fidelity simulation may be performed many times on the physical network to be optimized by using the digital twin network in the optimization process, and states of the digital twin network and the physical network may be obtained in real time, so as to correct the digital twin network, thereby improving the efficiency and accuracy of network optimization.

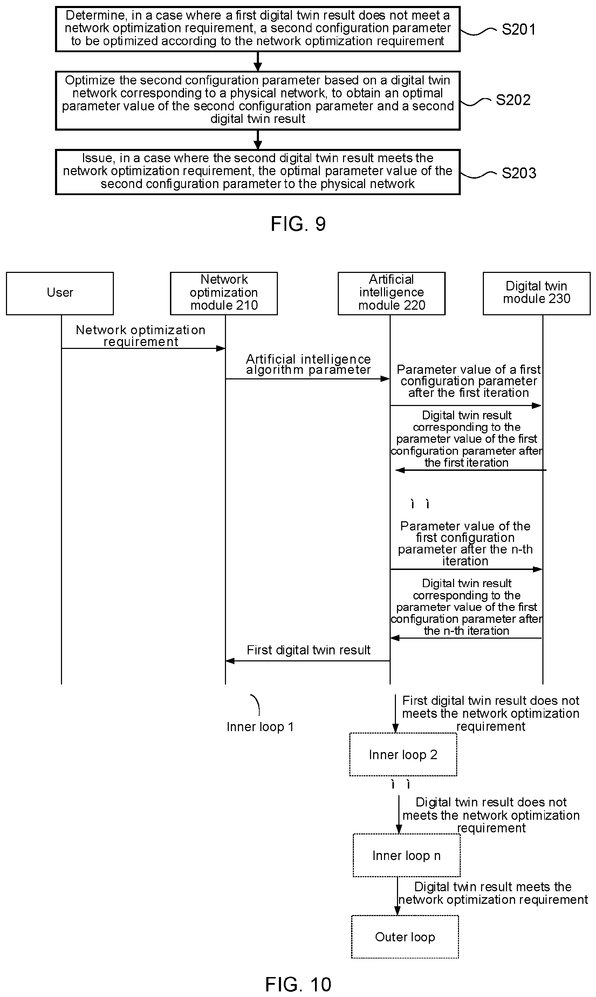

In some embodiments, as shown in FIG. 9, the network optimization method provided in the embodiments of the present disclosure further includes the following steps S201 to S203.

In S201, in a case where the first digital twin result does not meet the network optimization requirement, a second configuration parameter to be optimized is determined according to the network optimization requirement.

In some embodiments, the first configuration parameter and the second configuration parameter differ in at least one of: a parameter type, a parameter value range, and a number of parameters.

In an example, in an example where the network optimization requirement of the physical network is to obtain the maximum data volume, since the optimization requirement is to determine the maximum data volume, in order to determine whether the data volume may be further increased, a selection range of the parameter may be expanded to determine the second configuration parameter to be optimized. For example, a target received power and a parameter related to partial path loss compensation may be added into the first configuration parameter, so as to obtain the second configuration parameter. That is to say, the second configuration parameter includes the downlink bit error rate, the downlink AMC adjustment step, the target received power, and the parameter related to partial path loss compensation.

In S202, the second configuration parameter is optimized based on the digital twin network corresponding to the physical network, to obtain an optimal parameter value of the second configuration parameter and a second digital twin result.

The second digital twin result is a digital twin result obtained by the digital twin network according to the optimal parameter value of the second configuration parameter.

For example, in an example where the network optimization requirement of the physical network is to obtain the maximum data volume, the second configuration parameter includes the downlink bit error rate, the downlink AMC adjustment step, the target received power, and the parameter related to partial path loss compensation.

Value ranges of the downlink bit error rate, the downlink AMC adjustment step, the target received power, and the parameter related to partial path loss compensation are shown in Table 4.

Table 4

| Serial number | Configuration parameter | Value range |
|---|---|---|
| 1 | Downlink bit error rate | 0, 0.05, 0.1, 0.15, 0.2, 0.25, 0.3 |
| 2 | Downlink AMC adjustment step | 0, 0.1875, 0.375, 0.5625, 0.75 |
| 3 | Target received power | -220, -210, -100, -90, -80, -70, -60 |
| 4 | Parameter related to partial path loss compensation | 0, 1, 2, 3, 4, 5, 6, 7, 8 |

In an example, an initial value of the second configuration parameter may include a downlink bit error rate of 0, a downlink AMC adjustment step of 0.75, a target received power of -70 dBm, and a parameter related to partial path loss compensation of 0.

11

Therefore, on the basis of the relevant description in step S1021, the artificial intelligence algorithm structure is the TPE model, and the TPE model may fit a random model that aligns with historical data according to historical learning parameters, so as to perform a preset number of iterative updates on a parameter value of the second configuration parameter. For example, the preset number may be 50, and a learning direction is "maximum value". Therefore, 50 iterative updates may be performed on the parameter value of the second configuration parameter, so as to obtain the parameter values of the first configuration parameter after 50 iterative updates.

Furthermore, the parameter value of the second configuration parameter after each iterative update may also be input into the digital twin network, so as to obtain the digital twin result corresponding to the parameter value of the second configuration parameter after each iterative update. The optimal digital twin result among the digital twin results corresponding to the parameter values of the second configuration parameter after the iterative updates is used as the second digital twin result.

For example, the parameter values of the target parameter obtained by a plurality of iterative updates are shown in Table 5. The downlink throughput determined according to an initial value of the second configuration parameter is 123.12 Mbps, the uplink throughput determined according to the initial value of the second configuration parameter is 1.72 Mbps, and the parameter value of the target parameter may be determined to be 63.29 Mbps according to the formula (1).

Table 5

| Serial number | Downlink throughput (Mbps) (Average in cells) | Uplink throughput (Mbps) (Average in cells) | Target value (Mbps) (Average in cells) |
|---|---|---|---|
| 1 | 123.12 | 1.72 | 63.29 |
| 2 | 123.15 | 3.16 | 64.73 |
| 3 | 122.87 | 37.14 | 98.58 |
| 4 | 121.53 | 38.71 | 99.47 |
| 5 | 123.15 | 1.67 | 63.25 |

Therefore, in a case where a parameter value after the 18-th iterative update is the optimal digital twin result among the digital twin results corresponding to the parameter values of the second configuration parameter after the iterative updates, the digital twin result corresponding to the parameter value after the 18-th iterative update may be determined as the second digital twin result. The second configuration parameter includes a downlink bit error rate of 0.1, an AMC adjustment step of 0.5625, a target received power of -60 dBm, a parameter related to partial path loss compensation of 5, and an available maximum throughput is 100.28 Mbps.

That is to say, the optimal parameter value of the second configuration parameter includes the downlink bit error rate of 0.1, the AMC adjustment step of 0.5625, the target received power of -60 dBm, and the parameter related to partial path loss compensation of 5.

In an example, the second configuration parameter may include the downlink bit error rate, the downlink AMC adjustment step, and a physical uplink control channel power control parameter according to the embodiment shown in Table 3. Furthermore, the parameter values of the target parameter obtained by a plurality of iterative updates are shown in Table 6.

Table 6

| Serial number | Downlink throughput (Mbps) (Average in cells) | Uplink throughput (Mbps) (Average in cells) | Target value (Mbps) (Average in cells) |
|---|---|---|---|
| 1 | 1.62 | 20.76 | 21.57 |
| 2 | 1.55 | 3.68 | 4.45 |
| 3 | 1.64 | 17.57 | 18.39 |
| 4 | 1.63 | 1.65 | 2.47 |
| 5 | 1.50 | 1.65 | 2.40 |

Furthermore, in a case where a parameter value after the zero-th iterative update is the optimal digital twin result among the digital twin results corresponding to the parameter values of the second configuration parameter after the iterative updates, the digital twin result corresponding to the parameter value after the zero-th iterative update may be determined as the second digital twin result. The second configuration parameter includes a downlink bit error rate of 0.1, a downlink AMC adjustment step of 0.5625, a target received power of -60 dBm, a parameter related to partial path loss compensation of 5, and an available maximum throughput is 21.57 Mbps.

That is to say, the optimal parameter value of the second configuration parameter includes the downlink bit error rate of 0.1, the AMC adjustment step of 0.5625, the target received power of -60 dBm, and the parameter related to partial path loss compensation of 5.

In addition, for the detailed description of the technical features in step S202, reference may be made to the relevant description in step S102, and details will not be repeated herein.

In S203, in a case where the second digital twin result meets the network optimization requirement, the optimal parameter value of the second configuration parameter is issued to the physical network.

In some embodiments, in a case where the second digital twin result does not meet the network optimization requirement, a parameter value of a third configuration parameter is issued to the physical network. The parameter value of the third configuration parameter is a parameter value of a configuration parameter corresponding to an optimal digital twin result between the first digital twin result and the second digital twin result.

For example, on the basis of the embodiment shown in Table 6, a digital twin result corresponding to the parameter value after the zero-th iterative update is determined as the second digital twin result, and the maximum throughput available in the second digital twin result is 21.57 Mbps, while the maximum throughput available in the first digital twin result is 21.90 Mbps. Therefore, the downlink bit error rate of 0.1 and the downlink AMC adjustment step of 0.1875 in the parameter value corresponding to the first digital twin result may be determined as the parameter value of the third configuration parameter, and the parameter value of the third configuration parameter is issued to the physical network.

In some embodiments, in a case where the second digital twin result does not meet the network optimization requirement, the configuration parameter to be optimized may be updated and determined again according to the network optimization requirement, so as to perform the optimization process described above again until the digital twin result meets the network optimization requirement.

In some embodiments, on the basis of FIG. 6, as shown in FIG. 10, in a case where the first digital twin result does not meet the network optimization requirement, the inner loop process may be performed again. Furthermore, in a case where the second digital twin result does not meet the network optimization requirement, the inner loop process may be performed a third time, ..., until the digital twin result meets the network optimization requirement, and then the outer loop process may be initiated.

On the basis of the embodiments described above, in a case where the digital twin result does not meet the requirement, the "inner loop" process may be re-performed multiple times. In this way, the accuracy of network optimization may be further improved.

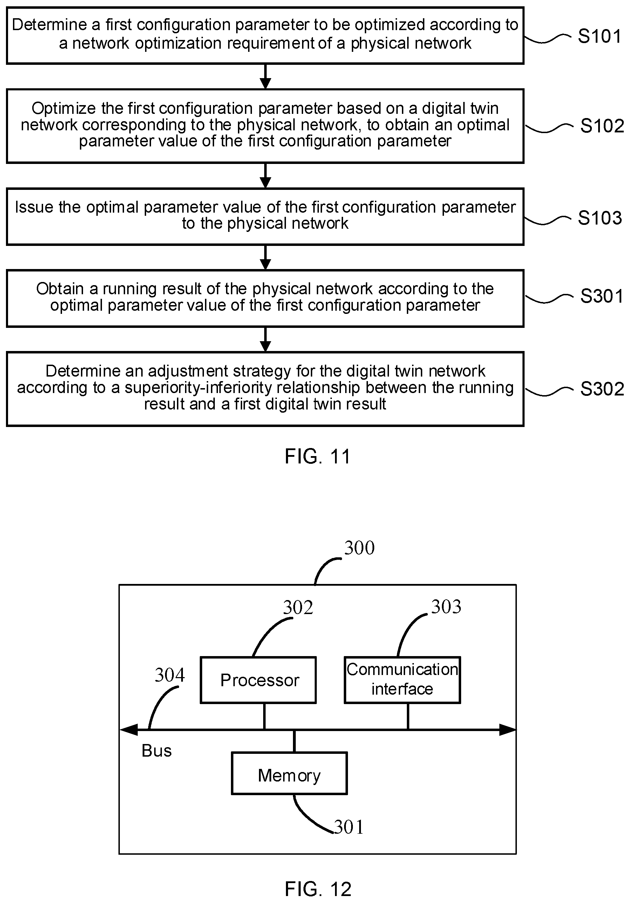

In some embodiments, as shown in FIG. 11, the network optimization method provided in the embodiments of the present disclosure may further include the following steps S301 and S302.

In S301, a running result of the physical network according to the optimal parameter value of the first configuration parameter is obtained.

In some embodiments, the running result is used to indicate the network performance of the physical network related to the network optimization requirement. For example, the parameter value of the target parameter mentioned above may be used to characterize the running result.

For example, in an example where the network optimization requirement of the physical network is to obtain the maximum data volume, the target parameter may be determined according to the uplink throughput and the downlink throughput.

In some embodiments, in a case where the first digital twin result does not meet the network optimization requirement, a running result of the physical network according to the optimal parameter value of the second configuration parameter may also be obtained. Of course, it is also possible to obtain a running result of the physical network according to the optimal parameter value of the third configuration parameter. Furthermore, an adjustment strategy for the digital twin network is determined according to a superiority-inferiority relationship between the running result and the corresponding digital twin result.

In S302, an adjustment strategy for the digital twin network is determined according to a superiority-inferiority relationship between the running result and a first digital twin result.

The first digital twin result is a digital twin result obtained by the digital twin network according to the optimal parameter value of the first configuration parameter.

In some embodiments, in a case where the running result is inferior to the first digital twin result, the adjustment strategy includes performing performance correction processing on the digital twin network. Furthermore, the network optimization process described above may be performed again based on the digital twin network subjected to the performance correction processing, to re-optimize the configuration parameter of the physical network, so as to obtain the optimal parameter value of the first configuration parameter.

Alternatively, in a case where the running result is superior to the first digital twin result, the current network optimization process may be terminated. In addition, the optimal parameter value of the first configuration parameter may be fed back to the user.

In some embodiments, the network optimization result may also be determined according to a relationship between the running result and a running result of the physical network in the previous network optimization cycle. The running result of the physical network in the previous network optimization cycle is a running result of the physical network obtained by performing the previous network optimization process according to the network optimization requirement.

In an example, the running result is that the available maximum throughput is 95.72 Mbps, and the running result of the physical network obtained by performing the previous network optimization process is that the available maximum throughput is 75 Mbps. Therefore, the current network optimization process may be terminated. In addition, the optimal parameter value of this configuration parameter may be fed back to the user. For example, the optimal parameter value may include a downlink bit error rate of 0.1, a downlink AMC adjustment step of 0.5625, a target received power of -60 dBm, and a parameter related to partial path loss compensation of 5.

In another example, the running result is that the available maximum throughput is 21.90 Mbps, and the running result of the physical network obtained by performing the previous network optimization process is that the available maximum throughput is 20.03 Mbps. Therefore, the current network optimization process may be terminated. In addition, the optimal parameter value of this configuration parameter may be fed back to the user. For example, the optimal parameter value may include a downlink bit error rate of 0.1 and a downlink AMC adjustment step of 0.1875.

If the modules of the network optimization system 200 described above are implemented in the form of the software functional module and sold or used as an independent product, they may be stored in a computer-readable storage medium. Based on such understanding, the technical solutions of the embodiments of the present disclosure may be essentially, or some of the technical solutions of the embodiments of the present disclosure that contribute to some technologies may be, or all or some of the technical solutions may be, embodied in the form of a software product. The computer software product is stored in a storage medium and includes a plurality of instructions for enabling a computer device (e.g., a personal computer, a server, or a network device) or a processor to perform all or some of the steps of the methods as described in the embodiments of the present disclosure The storage media for storing the computer software product includes a variety of media capable of storing program codes, such as a USB flash disk, a mobile hard disk, a read-only memory (ROM), a random access memory (RAM), a magnetic disk, or an optical disk.

In a case where functions of the modules of the network optimization system 200 described above are implemented in the form of hardware, a communication device 300 is also provided in embodiments of the present disclosure, and the communication device 300 is used to implement the network optimization method provided in the present disclosure. As shown in FIG. 12, the communication device 300 includes: a communication interface 303, a processor 302, and a bus 304. For example, the communication device may further include a memory 301.

The processor 302 may implement or execute various exemplary logical blocks, modules and circuits described in combination with the embodiments of the present disclosure. The processor 302 may be a central processing unit, a general-purpose processor, a digital signal processor, an application specific integrated circuit, a field programmable gate array or any other programmable logic device, a transistor logic device, a hardware component, or any combination thereof. The processor 302 may implement or execute various exemplary logical blocks, modules and circuits described in combination with the embodiments of the present disclosure. The processor 302 may also be a combination that implements computing functions, for example, a combination of one or more microprocessors, or a combination of a digital signal processor (DSP) and a microprocessor.

The communication interface 303 is used to connect to other devices through a communication network. The communication network may be an Ethernet, a radio access network, a wireless local area network (WLAN), or the like.

The memory 301 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or any other magnetic disk storage device, or any other medium capable of being used to carry or store desired program codes and capable of being accessed by a computer, where the desired program codes have instructions or are in a form of data structure.

In a possible implementation manner, the memory 301 may exist independently of the processor 302, and the memory 301 may be connected to the processor 302 through the bus 304, and is used for storing instructions or program codes executable by the processor 302, such as computer program instructions. When calling and executing the instructions or program codes stored in the memory 301, the processor 302 may achieve the communication method provided in the embodiments of the present disclosure.

In another possible implementation manner, the memory 301 may also be integrated with the processor 302.

The bus 304 may be an extended industry standard architecture (EISA) bus or the like. The bus 304 may be classified as an address bus, a data bus, and a control bus. For ease of representation, only one bold line is used in FIG. 12, but it does not mean that there is only one bus or one type of bus.

A computer-readable storage medium (e.g., a non-transitory computer-readable storage medium) is provided in some embodiments of the present disclosure, the computer-readable storage medium has stored a computer program instruction. When the computer program instruction is executed on a computer (e.g., the communication device described above, the processor of the communication device, or the environment reflection function module described above), enables the computer to perform the environment reflection transmission method as described in any one of the embodiments described above. It will be understood that the present disclosure does not limit the specific form of the computer.

In some examples, the computer-readable storage medium may include, but is not limited to a magnetic storage device (e.g., a hard disk, a floppy disk or a magnetic tape), an optical disk (e.g., a compact disk (CD) or a digital versatile disk (DVD)), a smart card and a flash memory device (e.g., an erasable programmable read-only memory (EPROM), a card, a stick or a key driver). The various computer-readable storage media described in present disclosure may represent one or more devices and/or other machine-readable storage media for storing information. The term "machine-readable storage medium" may include, but is not limited to, wireless channels and various other media capable of storing, containing, and/or carrying instructions and/or data.

A computer program product including instructions is provided in embodiments of the present disclosure. When the computer program product runs on a computer, enables the computer to perform the method described in any one of the embodiments described above.

The above are only specific embodiments of the present disclosure, but the scope protection of the present disclosure is not limited thereto, and any variations or replacements within the technical scope of the present disclosure will fall within the protection scope of the present disclosure. Therefore, the protection scope of the present disclosure will be subject to the protection scope of the claims.

**Claims**

1. A network optimization method, comprising:

   determining a first configuration parameter to be optimized according to a network optimization requirement of a physical network;
   optimizing the first configuration parameter based on a digital twin network corresponding to the physical network, to obtain an optimal parameter value of the first configuration parameter; and
   issuing the optimal parameter value of the first configuration parameter to the physical network.

2. The method according to claim 1, wherein the issuing the optimal parameter value of the first configuration parameter to the physical network, includes:

   obtaining a first digital twin result, wherein the first digital twin result is a digital twin result obtained by the digital twin network according to the optimal parameter value of the first configuration parameter; and
   issuing, in a case where the first digital twin result meets the network optimization requirement, the optimal parameter value of the first configuration parameter to the physical network.

3. The method according to claim 1, wherein the network optimization requirement includes any one of: an environment configuration requirement, a resource utilization requirement, a requirement for a number of retransmissions, a capacity requirement, and a service experience requirement.

4. The method according to claim 1, wherein the first configuration parameter includes at least one of: a geographic information configuration parameter, a system information configuration parameter, a frequency information configuration parameter, an access configuration parameter, a physical layer parameter, a control algorithm parameter, a power control algorithm parameter, and an adaptive modulation and coding parameter.

5. The method according to claim 1, wherein the optimizing the first configuration parameter based on the digital twin network corresponding to the physical network, to obtain the optimal parameter value of the first configuration parameter, includes:

   performing a preset number of iterative updates on a parameter value of the first configuration parameter;
   inputting the parameter value of the first configuration parameter after each iterative update into the digital twin network, to obtain a digital twin result corresponding to the parameter value of the first configuration parameter after each iterative update;
   using an optimal digital twin result among the digital twin results corresponding to the parameter values of the first configuration parameter after the iterative updates as a first digital twin result; and
using a parameter value of the first configuration parameter corresponding to the first digital twin result as the optimal parameter value of the first configuration parameter.

6. The method according to claim 5, wherein a parameter value of the first configuration parameter after an i-th iterative update is determined according to a parameter value of the first configuration parameter after a (i-1)-th iterative update and a digital twin result corresponding to the parameter value of the first configuration parameter after the (i-1)-th iterative update, and i is a positive integer.

7. The method according to claim 5, wherein the performing the preset number of iterative updates on the parameter value of the first configuration parameter, includes:
performing, according to an artificial intelligence algorithm, the preset number of iterative updates on the parameter value of the first configuration parameter.

8. The method according to claim 1, wherein the determining the first configuration parameter to be optimized according to the network optimization requirement of the physical network, includes:

determining a target parameter according to the network optimization requirement; and
determining the first configuration parameter from a set of configuration parameters related to the target parameter.

9. The method according to claim 1, wherein the determining the first configuration parameter to be optimized according to the network optimization requirement of the physical network, includes:
determining, in response to detecting that a physical state of the physical network changes, the first configuration parameter to be optimized according to the network optimization requirement of the physical network.

10. The method according to claim 2, further comprising:

determining, in a case where the first digital twin result does not meet the network optimization requirement, a second configuration parameter to be optimized according to the network optimization requirement;
optimizing the second configuration parameter based on the digital twin network corresponding to the physical network, to obtain an optimal parameter value of the second configuration parameter and a second digital twin result, wherein the second digital twin result is a digital twin result obtained by the digital twin network according to the optimal parameter value of the second configuration parameter; and
issuing, in a case where the second digital twin result meets the network optimization requirement, the optimal parameter value of the second configuration parameter to the physical network.

11. The method according to claim 10, further comprising:
issuing, in a case where the second digital twin result does not meet the network optimization requirement, a parameter value of a third configuration parameter to the physical network, wherein the parameter value of the third configuration parameter is a parameter value of a configuration parameter corresponding to an optimal digital twin result between the first digital twin result and the second digital twin result.

12. The method according to claim 10, wherein the first configuration parameter and the second configuration parameter differ in at least one of: a parameter type, a parameter value range, and a number of parameters.

13. The method according to claim 1, further comprising:

obtaining a running result of the physical network according to the optimal parameter value of the first configuration parameter; and
determining an adjustment strategy for the digital twin network according to a superiority-inferiority relationship between the running result and a first digital twin result; wherein the first digital twin result is a digital twin result obtained by the digital twin network according to the optimal parameter value of the first configuration parameter.

14. The method according to claim 13, wherein in a case where the running result is inferior to the first digital twin result, the adjustment strategy includes performing performance correction processing on the digital twin network.

15. The method according to claim 1, further comprising:

determining a construction parameter of the digital twin network according to a construction parameter of the physical network; and

constructing the digital twin network according to the construction parameter of the digital twin network.

16. The method according to claim 15, wherein the construction parameter of the digital twin network includes one or more of: a network state configuration parameter, a relevant algorithm parameter, and an environment parameter; wherein the network state configuration parameter includes one or more of: a network key performance indicator (KPI), a cell load parameter, a cell interference parameter, a user statistical characteristic parameter; the relevant algorithm parameter includes one or more of: a physical layer parameter, a scheduling algorithm parameter, a power control algorithm parameter, and an adaptive modulation and coding parameter; the environment parameter includes one or more of: a geographical parameter, a system parameter, a frequency parameter, and an access configuration parameter.

17. The method according to claim 15, further comprising:

updating, in response to detecting that a physical state of the physical network changes, the construction parameter of the digital twin network, to obtain an updated construction parameter; and

reconstructing the digital twin network according to the updated construction parameter.

18. A network optimization system, wherein the network optimization system comprises a network optimization module and an artificial intelligence module;

the artificial intelligence module is configured to determine a first configuration parameter to be optimized according to a network optimization requirement of a physical network;

the artificial intelligence module is further configured to optimize the first configuration parameter based on a digital twin network corresponding to the physical network, to obtain an optimal parameter value of the first configuration parameter; and

the network optimization module is configured to issue the optimal parameter value of the first configuration parameter to the physical network.

19. The network optimization system according to claim 18, wherein the network optimization system further comprises a digital twin module; the digital twin module is configured to:

determine a construction parameter of the digital twin network according to a construction parameter of the physical network; and

construct the digital twin network according to the construction parameter of the digital twin network.

20. The network optimization system according to claim 18, wherein the artificial intelligence module is configured to:

perform a preset number of iterative updates on a parameter value of the first configuration parameter;

input the parameter value of the first configuration parameter after each iterative update into the digital twin network, to obtain a digital twin result corresponding to the parameter value of the first configuration parameter after each iterative update;

use an optimal digital twin result among the digital twin results corresponding to the parameter values of the first configuration parameter after the iterative updates as a first digital twin result; and

use a parameter value of the first configuration parameter corresponding to the first digital twin result as the optimal parameter value of the first configuration parameter.

21. The network optimization system according to claim 18, wherein the network optimization module is configured to:

obtain a first digital twin result, wherein the first digital twin result is a digital twin result obtained by the digital twin network according to the optimal parameter value of the first configuration parameter; and

issue, in a case where the first digital twin result meets the network optimization requirement, the optimal parameter value of the first configuration parameter to the physical network.

22. The network optimization system according to claim 21, wherein the network optimization module is further configured to determine, in a case where the first digital twin result does not meet the network optimization requirement, a second configuration parameter to be optimized according to the network optimization requirement;

the artificial intelligence module is further configured to optimize the second configuration parameter based on the digital twin network corresponding to the physical network, to obtain an optimal parameter value of the second configuration parameter and a second digital twin result, and the second digital twin result is a digital twin result obtained by the digital twin network according to the optimal parameter value of the second configuration parameter; and

the network optimization module is further configured to issue, in a case where the second digital twin result meets the network optimization requirement, the optimal parameter value of the second configuration parameter to the physical network.

23. The network optimization system according to claim 22, wherein

the network optimization module is further configured to issue, in a case where the second digital twin result does not meet the network optimization requirement, a parameter value of a third configuration parameter to the physical network, and the parameter value of the third configuration parameter is a parameter value of a configuration parameter corresponding to an optimal digital twin result between the first digital twin result and the second digital twin result.

24. The network optimization system according to claim 19, wherein

the network optimization module is further configured to: obtain a running result of the physical network according to the optimal parameter value of the first configuration parameter; determine an adjustment strategy for the digital twin network according to a superiority-inferiority relationship between the running result and a first digital twin result; and send the adjustment strategy to the digital twin module; wherein the first digital twin result is a digital twin result obtained by the digital twin network according to the optimal parameter value of the first configuration parameter; and

the digital twin module is further configured to adjust the digital twin network according to the adjustment strategy.

25. A communication device, comprising: a memory and a processor; wherein the memory is coupled to the processor; the memory is configured to store instructions executable by the processor; upon the processor executes the instructions, the processor performs the method according to any one of claims 1 to 17.

26. A computer-readable storage medium, wherein the computer-readable storage medium has stored computer instructions that, upon run on a communication device, enable the communication device to perform the method according to any one of claims 1 to 17.

EP 4 750 123 A1

Physical network

Terminal device       Access network       Aggregation network       Core network

FIG. 1

Network optimization system 200

Network optimization module 210

Physical network 240

Artificial intelligence module 220

Digital twin module 230

FIG. 2

On the basis of network optimization requirements of a physical network, determine a first configuration parameter to be optimized — S101

On the basis of a digital twin network corresponding to the physical network, optimize the first configuration parameter, to obtain an optimal parameter value of the first configuration parameter — S102

Issue the optimal parameter value of the first configuration parameter to the physical network — S103

FIG. 3

19

Determine a first configuration parameter to be optimized according to a network optimization requirement of a physical network — S101

Perform a preset number of iterative updates on a parameter value of the first configuration parameter — S1021

Input the parameter value of the first configuration parameter after each iterative update into a digital twin network, to obtain a digital twin result corresponding to the parameter value of the first configuration parameter after each iterative update — S1022

— S102

Use an optimal digital twin result among the digital twin results corresponding to the parameter values of the first configuration parameter after the iterative updates as a first digital twin result — S1023

Use a parameter value of the first configuration parameter corresponding to the first digital twin result as an optimal parameter value of the first configuration parameter — S1024

Issue the optimal parameter value of the first configuration parameter to the physical network — S103

FIG. 4

Network optimization requirement

Issue a configuration parameter of a digital twin network

Artificial intelligence algorithm parameter

Parameter values of first configuration parameters after n iterative updates

Network optimization module 210

Artificial intelligence module 220

Digital twin result corresponding to the parameter value after each iterative update

Digital twin module 230

Optimal first digital twin result

Inner loop

Running result according to the optimal parameter value of the first configuration parameter

Optimal parameter value of the first configuration parameter

Physical network 240

Physical state of the physical network

Outer loop

FIG. 5

FIG. 6

| User | Network optimization module 210 | Physical network 240 |
|---|---|---|

Network optimization requirement →

← Physical state 1 of the physical network (state is unchanged)

Inner loop

ꟾ ꟾ

← Physical state n of the physical network (state Is unchanged)

Optimal parameter value of a first configuration parameter →

← Running result according to the optimal parameter value of the first configuration parameter

← Network optimization result

## FIG. 7

| User | Network optimization module 210 | Physical network 240 |
|---|---|---|

Network optimization requirement →

← Physical state 1 of the physical network (state is unchanged)

Inner loop 1

ꟾ ꟾ

← Physical state n of the physical network (state changes)

Inner loop n

Optimal parameter value of a first configuration parameter →

← Running result according to the optimal parameter value of the first configuration parameter

← Network optimization result

## FIG. 8

Determine, in a case where a first digital twin result does not meet a network optimization requirement, a second configuration parameter to be optimized according to the network optimization requirement — S201

Optimize the second configuration parameter based on a digital twin network corresponding to a physical network, to obtain an optimal parameter value of the second configuration parameter and a second digital twin result — S202

Issue, in a case where the second digital twin result meets the network optimization requirement, the optimal parameter value of the second configuration parameter to the physical network — S203

FIG. 9

| User | Network optimization module 210 | Artificial intelligence module 220 | Digital twin module 230 |

Network optimization requirement

Artificial intelligence algorithm parameter

Parameter value of a first configuration parameter after the first iteration

Digital twin result corresponding to the parameter value of the first configuration parameter after the first iteration

Parameter value of the first configuration parameter after the n-th iteration

Digital twin result corresponding to the parameter value of the first configuration parameter after the n-th iteration

First digital twin result

Inner loop 1

First digital twin result does not meets the network optimization requirement

Inner loop 2

Digital twin result does not meets the network optimization requirement

Inner loop n

Digital twin result meets the network optimization requirement

Outer loop

FIG. 10

23

Determine a first configuration parameter to be optimized according to a network optimization requirement of a physical network ⟍⟋ S101

Optimize the first configuration parameter based on a digital twin network corresponding to the physical network, to obtain an optimal parameter value of the first configuration parameter ⟍⟋ S102

Issue the optimal parameter value of the first configuration parameter to the physical network ⟍⟋ S103

Obtain a running result of the physical network according to the optimal parameter value of the first configuration parameter ⟍⟋ S301

Determine an adjustment strategy for the digital twin network according to a superiority-inferiority relationship between the running result and a first digital twin result ⟍⟋ S302

FIG. 11

300

302    303

304    Processor    Communication interface

Bus

Memory

301

FIG. 12

## INTERNATIONAL SEARCH REPORT

| International application No. |
|---|
| **PCT/CN2024/079126** |

**A.    CLASSIFICATION OF SUBJECT MATTER**

H04W 24/02(2009.01)i

According to International Patent Classification (IPC) or to both national classification and IPC

**B.    FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, VCN, ENTXT, WPABSC: 网络, 物理, 配置, 参数, 优化, 最优, 需求, 数字孪生, 仿真, 模型, 人工智能, network, physical, configur+, parameter?, optimiz+, optimal, requirement, DT, digital twin, twin, simulat+, model, AI

**C.    DOCUMENTS CONSIDERED TO BE RELEVANT**

| Category* | Citation of document, with indication, where appropriate, of the relevant passages | Relevant to claim No. |
|---|---|---|
| X | WO 2022121559 A1 (ZTE CORP.) 16 June 2022 (2022-06-16) description, page 2, line 25 to page 10, line 15, and claims 1-10 | 1-26 |
| X | CN 114189888 A (716TH RESEARCH INSTITUTE OF CHINA SHIPBUILDING INDUSTRY CORPORATION) 15 March 2022 (2022-03-15) description, paragraphs 28-70 | 1-26 |
| X | CN 113590232 A (NANJING UNIVERSITY OF INFORMATION SCIENCE & TECHNOLOGY) 02 November 2021 (2021-11-02) description, paragraphs 88-167 | 1-26 |
| A | CN 114637262 A (GUANGDONG TAYUN SCIENCE AND TECHNOLOGY CO., LTD. et al.) 17 June 2022 (2022-06-17) entire document | 1-26 |
| A | US 2022164502 A1 (JIANGSU UNIVERSITY) 26 May 2022 (2022-05-26) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2024** | **13 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/079126** |

| Patent document cited in search report | | | Publication date (day/month/year) | Patent family member(s) | | | Publication date (day/month/year) |
| --- | --- | --- | --- | --- | --- | --- | --- |
| WO | 2022121559 | A1 | 16 June 2022 | CN | 114599056 | A | 07 June 2022 |
| CN | 114189888 | A | 15 March 2022 | None | | | |
| CN | 113590232 | A | 02 November 2021 | None | | | |
| CN | 114637262 | A | 17 June 2022 | None | | | |
| US | 2022164502 | A1 | 26 May 2022 | CN | 112417619 | A | 26 February 2021 |

Form PCT/ISA/210 (patent family annex) (July 2022)

**EP 4 750 123 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310927377